# EUROPÄISCHE PATENTANMELDUNG

(11) **EP 1 685 892 A1**
(43) Veröffentlichungstag der Anmeldung: **02.08.2006**
(21) Anmeldenummer: 05028470.2
(22) Anmeldetag: 24.12.2005
(51) Int. Cl.: B01D 71/02, C01B 13/02, C04B 35/48, C04B 35/50, H01M 8/10, B01D 67/00

(54) **Verfahren zur Herstellung einer dünnen, gasdichten und Protonen leitenden Keramikschicht sowie Verwendung derselben**

(30) Priorität: 26.01.2005 DE 102005003612
(71) Anmelder: Forschungszentrum Jülich GmbH, 52425 Jülich (DE)
(72) Erfinder: Schober, Tilman, 52459 Inden (DE)

(57) **Zusammenfassung**

Die Erfindung betrifft ein Verfahren zur Herstellung eines Protonenleiters, wobei zunächst auf eine auf einem Substrat angeordnete gasdichte Sauerstoffionen leitende Schicht eine weitere Schicht umfassend MeCO₃ mit Me = Ba, Sr oder Ca aufgebracht wird. Das Schichtsystem wird getrocknet und gesintert, wobei sich die Sauerstoffionen leitende Schicht zumindest teilweise in eine gasdichte, Protonen leitende Schicht umwandelt. Als Sauerstoffionen leitende Ausgangschichten sind insbesondere solche aus 8YSZ (Zr_{0,84}Y_{0,16}O_{1,92}), CGD (Ce_{0,8}Gd_{0,2}O_{1,9}) oder Zr_{0,9}In_{0,1}O_{1,95} geeignet. Die Umwandlung erfolgt aufgrund einer Festkörperreaktion des reaktiven MeO, welches mit dem Sauerstoffionenleiter reagiert.

Vorteilhaft kann zunächst ein Sauerstoffionenleiter in beliebiger Geometrie hergestellt werden, der durch das erfindungsgemäße Verfahren zumindest teilweise in einen Protonenleiter umgewandelt wird. Mögliche Verwendungen dieser erfindungsgemäß hergestellten Protonenleiter finden sich beispielsweise in der DMFC, der Gassensorik und auch bei chemischen Reaktoren.

## Beschreibung

Die Erfindung betrifft ein Verfahren zur Herstellung einer dünnen, gasdichten und Protonen leitenden Keramikschicht sowie die Verwendung dieser Schicht.

### Stand der Technik

Das Einsatzgebiet von keramischen Protonenleitern ist sehr vielfältig. So könnten beispielsweise Protonenleiter für die Abtrennung von CO₂ in fossilen Kraftwerken in Endlagerkonzepte eingesetzt werden. Die hier verwendeten Protonenleitermembranen/Wasserstoffdiffusionsmembranen bestehen insbesondere aus mit Yttrium dotiertem Bariumcerat oder AgPd. Ferner können keramische Protonenleiter auch in der Gassensorik oder für chemische Reaktoren eingesetzt werden. Nicht zuletzt sind oxidische Protonenleiter als Elektrolyte auch für die Brennstoffzellentechnologie interessant.

In Brennstoffzellen wird chemische Energie über räumlich getrennte Elektrodenreaktionen direkt in elektrische Energie umgewandelt. Brennstoffzellen mit keramischen Sauerstoffionenleitern, wie z. B. 8YSZ als Elektrolyt, benötigen jedoch so hohe Betriebstemperaturen, dass sich daraus erhebliche Materialprobleme ergeben.

Eine mögliche Alternative dazu sind keramische Protonenleiter, die die notwendige Leitfähigkeit bei wesentlich niedrigeren Temperaturen erreichen. Dotierte Erdalkali-Zirkonate und -Cerate mit Perowskitstruktur können durch Einbau von Wasserdampf leichtbewegliche protonische Defekte bilden. Ein viel versprechendes Material ist beispielsweise dotiertes Barium-Zirkonat oder auch Barium-Calcium-Niobate (BCN18). BCN18 findet zudem Anwendung als Feuchtesensor oder auch als Wasserdampfelektrolyseur.

Die vorgenannten keramischen Schichten bzw. Membranen können, je nachdem ob sie porös oder gasdicht ausgestaltet sein sollen, über Siebdruck und Plasmasprayverfahren oder auch über die für Keramiken bekannte Feststoffreaktion (Kalzinieren, Pressen, Sintern) aus Karbonaten und Oxiden hergestellt werden.

### Aufgabe und Lösung

Die Aufgabe der Erfindung ist es, dünne, Protonen leitende, dichte keramischen Schichten auf geeigneten Substraten bereit zu stellen, insbesondere auch dünne Schichten mit maximal 50 µm Schichtdicke, die in der Gassensorik, bei chemischen Reaktoren oder auch in Brennstoffzellen eingesetzt werden können.

Die Aufgabe der Erfindung wird gelöst durch ein Verfahren zur Herstellung eines dünnen Protonenleiters gemäß Hauptanspruch sowie durch die Verwendung eines so hergestellten Protonenleiters gemäß Nebenanspruch. Vorteilhafte Ausführungsformen der Herstellung finden sich in den auf Anspruch 1 rückbezogenen Ansprüchen.

### Gegenstand der Erfindung

Die Erfindung betrifft ein Verfahren, mit dem aus einer dünnen Sauerstoffionen leitenden keramischen Schicht ein gasdichter Protonenleiter hergestellt werden kann.

Sauerstoffionenleiter sind in der Regel Werkstoffe, die in der CaF₂-Struktur vorliegen, welche Leerstellen im Sauerstoffuntergitter aufweisen, in dem sich dann die Sauerstoffionen bewegen können. Geeignete Vertreter solcher Sauerstoffionenleiter sind beispielsweise dotiertes Zirkonoxid (ZrO₂) in Form von 8YSZ (= Zr_{0,84}Y_{0,16}O_{1,92}) oder dotiertes Ceroxid (CeO₂) in Form von CGO (= Ce_{0.8}Gd_{0.2}O_{1.9}) als Ausgangsschichten. Demgegenüber liegen Protonenleiter in der Regel in einer Perowskitstruktur vor.

Zur Herstellung der erfindungsgemäßen Protonenleiter wird in der Regel ein solcher Sauerstoffionenleiter mit einer Schichtdicke von ca. 5 bis 10 µm, der auf einem Substrat aufgebracht wurde, eingesetzt. Auf dieses beschichtete Substrat wird anschließend eine stöchiometrische Menge an MeCO₃ aufgetragen, wobei Me für Ba, Sr oder auch Ca steht. Anstelle der Karbonate können auch die Oxide oder Hydroxide eingesetzt werden.

Bei einem sich anschließenden Sinterschritt bei Temperaturen zwischen 1260 und 1350 °C für 4 bis 10 Stunden treten, am Beispiel für BaCO₃ dargestellt, die folgenden zwei Prozessschritte auf:
1.

   BaCO₃ → BaO + CO₂

Die dabei entstehenden BaO Teilchen weisen eine Partikelgröße im Nanometerbereich auf und sind sehr reaktiv. Das BaO reagiert dann exotherm mit der Schicht des Sauerstoffionenleiters, z. B. 8YSZ oder CGO, gemäß der Formel:
2.

   BaO + Zr_{0,84}Y_{0,16}O_{1,92} → BaZr_{0,84}Y_{0,16}O_{2,92}

   oder

   BaO + Ce_{0,8}Gd_{0,2}O_{1,9} → BaCe_{0,8}Gd_{0,2}O_{2,9}

Die entstehenden Produkte BaZr_{0,84}Y_{0,16}O_{2,92} und BaCe_{0,8}Gd_{0,2}O_{2,9} werden auch als BZY16 und BCG20 bezeichnet. Beide sind auf dem Gebiet der Protonenleitung als sehr gute Protonenleiter bekannt. Da Y im Wesentlichen in Lösung bleibt, entstehen die genannten Verbindungen BZY16 bzw. BCG20.

Wird der Stöchiometrie entsprechend ausreichend Barium bzw. Strontium oder Kalzium angeboten, und werden die Sinterzeiten lange genug gewählt, so kann sich die gesamte aufgebrachte Schicht in einen gasdichten Protonenleiter umwandeln. Für viele Anwendungsfälle kann aber auch schon nur eine teilweise Umwandlung in einen Protonenleiter ausreichend sein.

Es konnte bei allen genannten Kombinationen nachgewiesen werden, dass bei der Phasenumwandlung keine offene Porosität zusätzlich entsteht, so dass eine ausreichende Gasdichtigkeit auch nach der Umwandlung bestehen bleibt.

Ein weiterer Vorteil des Verfahrens liegt darin, dass auf diese Weise selbst komplizierte Geometrien, die bislang aus einem Protonenleiter nicht hergestellt werden konnten, nunmehr durch Umwandlung eines Sauerstoffionenleiters einfach zu realisieren sind. Sauerstoffionenleiter sind bekanntermaßen einfacher herzustellen als Protonenleiter. Für 8YSZ besteht schon eine hoch entwickelte Technologie zur Herstellung von Tiegeln, Rohren und chemischen Reaktoren. Durch das erfindungemäße Verfahren wird nun der Vorteil der bekannten Prozesse für Sauerstoffionenleiter, wie sie beispielsweise für 8YSZ schon Standard sind, dazu genutzt, diese auf einfache Weise auf Geometrien für einen Protonenleiter zu übertragen.

### Spezieller Beschreibungsteil

Nachfolgend wird der Gegenstand der Erfindung anhand von Ausführungsbeispielen näher erläutert, ohne dass der Gegenstand der Erfindung dadurch beschränkt wird.

Als ein erfindungsgemäßes Ausführungsbeispiel wurde auf einem Ni-Cermet als Substrat eine 5 µm starke gasdichte 8YSZ Schicht als Ausgangsschicht aufgebracht. Auf diese wurde eine stöchiometrische Menge an BaCO₃ durch Siebdruck aufgetragen. Die Bariummenge kann beispielsweise durch die Maschenweite des Siebes und/oder durch den Feststoffgehalt der Paste variiert werden. Nach dem Trocknen der Schicht bei ca. 60 °C wurde die Probe bei 1300 °C für 4 Stunden gesintert, wodurch eine vollständige Umwandlung des Sauerstoffleiters in einen Protonenleiter erfolgte.

Als Qualitätskontrolle wurden die Proben in der Mitte gebrochen und in einem REM untersucht. Die Tiefenabhängigkeit der Bariumkonzentration wurde mittels energiedispersiver Röntgenmikroanalyse verfolgt.

Als weitere geeignete Ausgangschichten wurden auch CGO Schichten eingesetzt.

In einem weiteren, dritten Ausführungsbeispiel wurde ein Ni-Cermet mit einer darauf abgeschiedenen Zr_{0,9}In_{0,1}O_{1,95}-Schicht als Sauerstoffionenleiter eingesetzt. Mit Hilfe des Siebdrucks wurde darauf eine CaCO₃-Schicht aufgebracht. Auch diese Probe wurde bei 60 °C getrocknet und anschließend bei 1300 °C für 4 Stunden gesintert. Nach der vollständigen Umwandlung entstand ein Protonenleiter mit der Zusammensetzung CaZr_{0,9}In_{0,1}O_{2,95}. Dieser Protonenleiter hat die übliche Bezeichnung CZI10 und ist sehr gut für potentiometrische Anwendungen, z. B. in der Sensorik geeignet.

Je nach Anwendung kann der Fachmann eine vollständige oder auch nur eine teilweise Umwandlung in einen Protonenleiter bevorzugen, je nachdem in welcher Richtung die Protonenleitung in der Schicht erforderlich ist.

Sofern wie beim Beispiel einer Brennstoffzelle eine komplette Membran als Protonenleiter benötigt wird, in der sich die Protonen senkrecht zur Membran bewegen sollen, muss die zunächst als Sauerstoffionenleiter ausgebildete Membran vollständig in einen Protonenleiter umgewandelt werden. Daher sollte bei dem Verfahren eine stöchiometrisch ausreichende Menge an MeCO₃ zur Umwandlung zur Verfügung gestellt werden.

Demgegenüber kann es für die Anwendung als Sensor oder an der Oberfläche eines chemischen Reaktors ausreichen, wenn nur eine wenige µm dicke Schicht des Sauerstoffionenleiters in einen Protonenleiter umgewandelt wird, da schon dadurch eine Protonenleitung entlang der Schicht möglich wird.

## Patentansprüche

1. Verfahren zur Herstellung eines gasdichten Protonenleiters mit den Schritten
- auf eine auf einem Substrat angeordnete gasdichte, Sauerstoffionen leitende Schicht wird eine weitere Schicht umfassend MeCO₃ mit Me = Ba, Sr oder Ca aufgebracht,
- das Schichtsystem wird getrocknet und gesintert, wobei sich die Sauerstoffionen leitende Schicht zumindest teilweise in eine gasdichte, Protonen leitende Schicht umwandelt.

2. Verfahren nach Anspruch 1, bei dem die Umwandlung über eine Festkörperreaktion des Sauerstoffionenleiters mit entstehendem MeO erfolgt.

3. Verfahren nach Anspruch 1 oder 2, bei dem ein Sauerstoffionenleiter umfassend Zr_{0,84}Y_{0,16}O_{1,92}, Ce_{0,8}Gd_{0,2}O_{1,9} oder Zr_{0,9}In_{0,1}O_{1,95} eingesetzt wird.

4. Verfahren nach Anspruch 1 bis 3, bei dem der Sauerstoffionenleiter in Form einer dünnen Schicht mit maximal 10 µm Dicke, insbesondere mit einer Dicke zwischen 5 und 10 µm eingesetzt wird.

5. Verfahren nach Anspruch 1 bis 4, bei dem die weitere Schicht umfassend MeCO₃ als Paste auf den Sauerstoffionenleiter aufgebracht wird.

6. Verfahren nach Anspruch bis 1 bis 5, bei dem die weitere Schicht in stöchiometrisch ausreichender Menge für eine vollständige Umwandlung des Sauerstoffionenleiters aufgebracht wird.

7. Verfahren nach Anspruch 1 bis 6, bei dem aus dem Sauerstoffionenleiter zumindest teilweise ein Protonenleiter umfassend MeZr_{0,84}Y_{0,16}O_{2,92}, Me_{0,8}Gd_{0,2}O_{2,9} oder Me_{0,9}In_{0,1}O_{2,95} mit Me = Ba, Sr oder Ca gebildet wird.

8. Verwendung eines nach Anspruch 1 bis 7 hergestellten Protonenleiters in einer Brennstoffzelle, in einem Gassensor oder in einem chemischen Reaktor.
